# EUROPEAN PATENT APPLICATION

(11) **EP 4 607 858 A1**
(43) Date of publication of application: **27.08.2025**
(21) Application number: 23878912.7
(22) Date of filing: 22.09.2023
(51) Int. Cl.: H04L 12/40

(54) **TOPOLOGICAL NETWORK AND MANAGEMENT METHOD**

(30) Priority: 20.10.2022 CN 202211287855
(71) Applicant: 3peak Inc., Suzhou, Jiangsu 215000 (CN)
(72) Inventor: SONG, Hongdong, Suzhou, Jiangsu 215000 (CN); ZHAO, Yingchun, Suzhou, Jiangsu 215000 (CN); ZHAO, Yiming, Suzhou, Jiangsu 215000 (CN); ZHANG, Lin, Suzhou, Jiangsu 215000 (CN)
(74) Representative: Winter, Brandl - Partnerschaft mbB
(86) International application number: PCT/CN2023/120744
(87) International publication number: WO 2024/082919

(57) **Abstract**

This application provides a topology network and a management method. A master node device and a slave node device are configured to perform an initialization operation after being powered on, so that the master node device determines a dynamic address of each node device in the topology network; the master node device and the slave node device are further configured to perform an enumeration operation based on the dynamic address of each node device in the topology network after completing the initialization operation, so that the master node device obtains a port attribute of each node device in the topology network; the master node device and the slave node device are further configured to perform a configuration operation based on the port attribute of each node device in the topology network after completing the enumeration operation, to complete setting a virtual channel configuration table of each node device in the topology network; and the master node device and the slave node device are further configured to perform data transmission based on the virtual channel configuration table after completing the configuration operation. After the configuration operation is complete, the topology network can run stably and efficiently.

## Description

### TECHNICAL FIELD

This application relates to the communication field, and in particular, to a topology network and a management method.

### BACKGROUND

With the development of society, the types of electronic components become increasingly more diverse. In many scenarios, a single electronic component cannot meet requirements of a user. In this case, it is necessary to combine a plurality of electronic components into a topology network, and the plurality of electronic components work together under coordination of the topology network. An automotive audio network (AAN) in a topology network is used as an example. The automotive audio network is a serial communication network used to interconnect automotive audio devices, and is a topology network connecting automotive electronic components such as a head unit, a digital microphone, a radio, a power amplifier (PA), and an emergency call (E-Call) module in series.

The automotive audio network is very important for improving the driving experience of an automobile passenger and may even directly affect an operational judgment of a driver. How to set up an automotive audio network that runs stably and efficiently becomes a difficult problem to which a person skilled in the art continuously pays attention.

Information disclosed in this background section is only for the purpose of increasing understanding of the general background of the present invention, and should not be regarded as an acknowledgment or any form of suggestion that the information constitutes the conventional technology already known to a person of ordinary skill in the art.

### SUMMARY

An objective of this application is to provide a topology network and a management method, to at least partially improve the foregoing problem.

To achieve the above objective, the following technical solutions are used in embodiments of this application:
According to a first aspect, an embodiment of this application provides a topology network, and the topology network comprises a master node device and at least one slave node device, and the master node device and the at least one slave node device are connected in sequence;
the master node device and the slave node device are configured to perform an initialization operation after being powered on, so that the master node device determines a dynamic address of each node device in the topology network;
the master node device and the slave node device are further configured to perform an enumeration operation based on the dynamic address of each node device in the topology network after completing the initialization operation, so that the master node device obtains a port attribute of each node device in the topology network;
the master node device and the slave node device are further configured to perform a configuration operation based on the port attribute of each node device in the topology network after completing the enumeration operation, to complete setting a virtual channel configuration table of each node device in the topology network, wherein
the virtual channel configuration table comprises a virtual channel descriptor for data transmission at each port in the node device, and the virtual channel descriptor comprises corresponding port and/or data location information; and
the master node device and the slave node device are further configured to perform data transmission based on the virtual channel configuration table after completing the configuration operation.

According to a second aspect, an embodiment of this application provides a topology network management method, applied to a topology network, wherein the topology network comprises a master node device and at least one slave node device, the master node device and the at least one slave node device are connected in sequence, and the topology network management method comprises:
The master node device and the slave node device perform an initialization operation after being powered on, so that the master node device determines a dynamic address of each node device in the topology network;
the master node device and the slave node device perform an enumeration operation based on the dynamic address of each node device in the topology network after completing the initialization operation, so that the master node device obtains a port attribute of each node device in the topology network;
the master node device and the slave node device perform a configuration operation based on the port attribute of each node device in the topology network after completing the enumeration operation, to complete setting a virtual channel configuration table of each node device in the topology network, wherein
the virtual channel configuration table comprises a virtual channel descriptor for data transmission at each port in the node device, and the virtual channel descriptor comprises corresponding port and/or data location information; and
the master node device and the slave node device perform data transmission based on the virtual channel configuration table after completing the configuration operation.

Compared with the conventional technology, the embodiments of this application provide the topology network and the management method. The topology network comprises a master node device and at least one slave node device, wherein the master node device and the at least one slave node device are connected in sequence; the master node device and the slave node device are configured to perform an initialization operation after being powered on, so that the master node device determines a dynamic address of each node device in the topology network; the master node device and the slave node device are further configured to perform an enumeration operation based on the dynamic address of each node device in the topology network after completing the initialization operation, so that the master node device obtains a port attribute of each node device in the topology network; the master node device and the slave node device are further configured to perform a configuration operation based on the port attribute of each node device in the topology network after completing the enumeration operation, to complete setting a virtual channel configuration table of each node device in the topology network; the virtual channel configuration table comprises a virtual channel descriptor for data transmission at each port in the node device, and the virtual channel descriptor comprises corresponding port and/or data location information; and the master node device and the slave node device are further configured to perform data transmission based on the virtual channel configuration table after completing the configuration operation. After the configuration operation is complete, the topology network can run stably and efficiently. In the topology network comprising a serial connection or a ring connection by using a differential line, a frame structure is constructed for data transmission, and data forwarding is controlled by using the virtual channel configuration table, to efficiently use bandwidth of serial transmission.

To make the above objectives, features, and advantages of this application more understandable, the following is described in detail by using exemplary embodiments with reference to the accompanying drawings.

### BRIEF DESCRIPTION OF DRAWINGS

To describe the technical solutions in embodiments of this application more clearly, the following briefly describes the accompanying drawings that need to be used in the embodiments. It should be understood that, the accompanying drawings below only show some embodiments of this application, and thus should not be considered as limitations on the scope. A person of ordinary skill in the art may still derive other related drawings from the accompanying drawings without creative efforts.
FIG. 1 is a schematic structural diagram of a daisy chain topology network according to an embodiment of this application;
FIG. 2 is a schematic structural diagram of a ring topology network according to an embodiment of this application;
FIG. 3 is a schematic structural diagram of a node device according to an embodiment of this application;
FIG. 4 is a schematic diagram of a configuration process according to an embodiment of this application;
FIG. 5 is a schematic diagram of a data format sent out by each node device corresponding to virtual channel descriptors shown in Table 5 according to an embodiment of this application;
FIG. 6 is an example diagram of an enumeration process according to an embodiment of this application; and
FIG. 7 is a schematic flowchart of a topology network management method according to an embodiment of this application.

In the figures: 11-master node device; 12-slave node device.

### DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. Clearly, the described embodiments are some rather than all of embodiments of this application. Generally, components of embodiments of this application described and shown in the accompanying drawings herein may be arranged and designed in various manners.

Therefore, the following detailed description of the embodiments of this application in the accompanying drawings is not intended to limit the protection scope of this application, but merely indicates selected embodiments of this application. All other embodiments obtained by a person of ordinary skill in the art based on the embodiments of this application without creative efforts shall fall within the protection scope of this application.

It should be noted that similar reference signs and letters indicate similar items in the accompanying drawings below. Therefore, once an item is defined in one drawing, it does not need to be further defined and described in subsequent drawings. In addition, the terms "first", "second", and the like in the description of this application are merely used for the purpose of distinguishing description, and cannot be understood as indicating or implying relative importance

It should be noted that the relational terms such as first and second in this specification are used only to differentiate an entity or operation from another entity or operation, and do not require or imply any actual relationship or sequence between these entities or operations. In addition, the term "comprise", "contain", or any other variant thereof is intended to cover non-exclusive inclusion, so that a process, method, article, or device that comprises a series of elements comprises not only those elements but also other elements that are not expressly listed, or comprises elements inherent to such a process, method, article, or device. Without more limitations, an element defined by the phrasing "comprising a..." does not preclude the existence of other identical elements in the process, method, article, or device that comprises the element.

In the description of this application, it should be noted that orientations or location relationships indicated by terms "up", "down", "inside", "outside", and the like are orientation or location relationships shown in the accompanying drawings, or the usual orientation or location relationships of the products of this application when in use. These terms are only used to facilitate description of this application and simplify the description, but not to indicate or imply that the mentioned apparatus or elements must have a specific orientation or must be established and operated in a specific orientation, and thus these terms cannot be understood as a limitation to this application.

In the description of this application, it should be further noted that, unless otherwise specified and defined explicitly, the terms "arrangement" and "connection" should be understood broadly. For example, a connection may be a fixed connection, a removable connection, or an integral connection; may be a mechanical connection or an electrical connection; may be a direct connection or an indirect connection via an intermediate medium; or may be an internal connection between two elements. A person of ordinary skill in the art can understand specific meanings of these terms in this application based on specific situations.

Some implementations of this application are described below in detail with reference to the accompanying drawings. The following embodiments and features in the embodiments may be combined, provided that no conflict occurs.

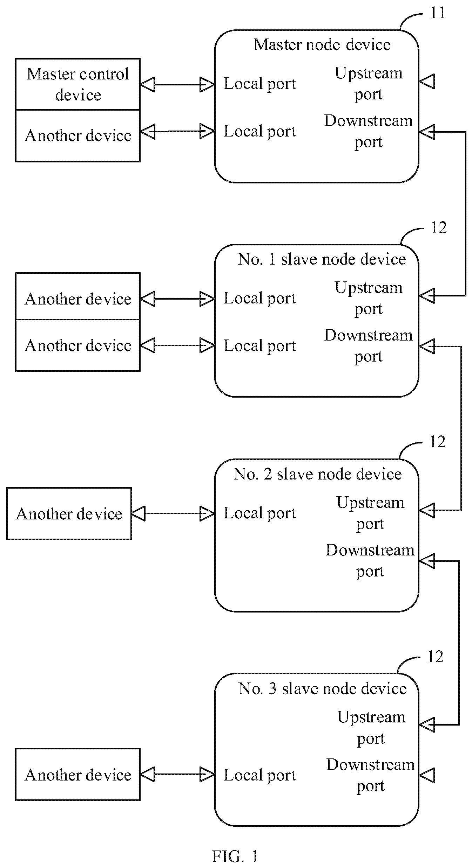

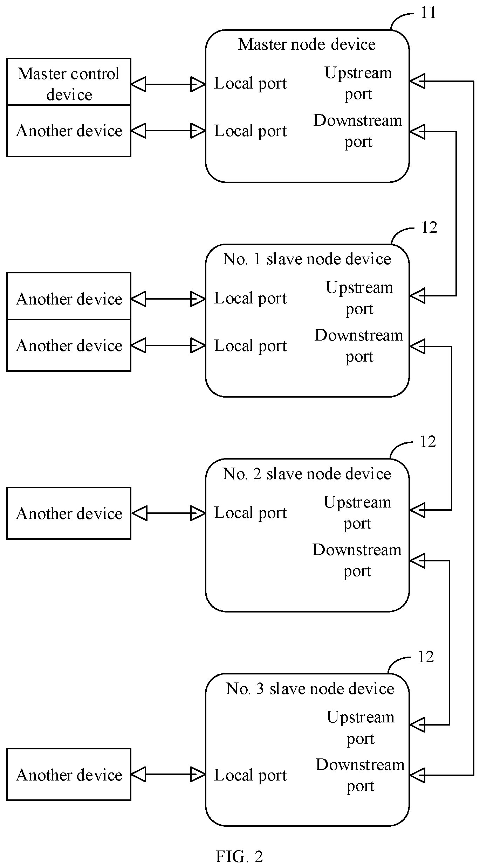

An embodiment of this application provides a topology network. Refer to FIG. 1 and FIG. 2. FIG. 1 is a schematic structural diagram of a daisy chain topology network of a vehicle according to an embodiment of this application. FIG. 2 is a schematic structural diagram of a ring topology network according to an embodiment of this application.

As shown in FIG. 1 and FIG. 2, the topology network comprises a master node device 11 and at least one slave node device 12, and the master node device 11 and the at least one slave node device 12 are connected in sequence. Optionally, any two node devices may be connected to each other by using a differential signal line.

Optionally, as shown in FIG. 1, the topology network is a serial topology network, a downstream port of the master node device 11 is connected to an upstream port of a first slave node device 12 (namely, a No. 1 slave node device in FIG. 1), an upstream port of an ith slave node device 12 is connected to a downstream port of an (i-1)th slave node device 12, and a downstream port of an nth slave node device 12 (namely, a No. 3 slave node device in FIG. 1) is suspended, wherein 2≤i≤n, and n is a quantity of slave node devices.

Optionally, as shown in FIG. 2, the topology network is a ring topology network, a downstream port of the master node device 11 is connected to an upstream port of a first slave node device 12 (namely, a No. 1 slave node device in FIG. 2), an upstream port of an ith slave node device 12 is connected to a downstream port of an (i-1)th slave node device 12, and a downstream port of an nth slave node device 12 (namely, a No. 3 slave node device in FIG. 2) is connected to an upstream port of the master node device 11, wherein 2≤i≤n, and n is a quantity of slave node devices.

It should be noted that using a serial connection and a ring connection for networking can reduce a quantity of connecting lines. In addition, data is received and forwarded by a node device, to avoid a problem of poor signal quality due to long-distance transmission.

It should be noted that in FIG. 1 and FIG. 2, n=3 is used as an example for description, but not as a limitation.

It should be understood that the topology network shown in FIG. 1 and FIG. 2 may be but is not limited to an automotive audio network (AAN). When the topology network is an automotive audio network, other devices connected to the slave node device 12 by using a local port may be but are not limited to a data collection sensor, a digital microphone, a radio, a power amplifier (PA), and an emergency call (E-Call) module. A master control device connected to the master node device 11 by using a local port may be but is not limited to a head unit.

Optionally, in the automotive audio network, each node device extracts data transmitted by an automotive audio and sensor data transmission network, converts the data into another format, and outputs the data in another data interface form; or converts data input in another data interface form into automotive audio and sensor data for transmission to the automotive audio network.

Optionally, the node device is a general name of a device connected to the automotive audio network by using a differential line, and comprises the master node device 11, the slave node device 12, a standby node device, and the like. The node device may convert a data stream transmitted by a local interface to the automotive audio network for long-distance bidirectional transmission.

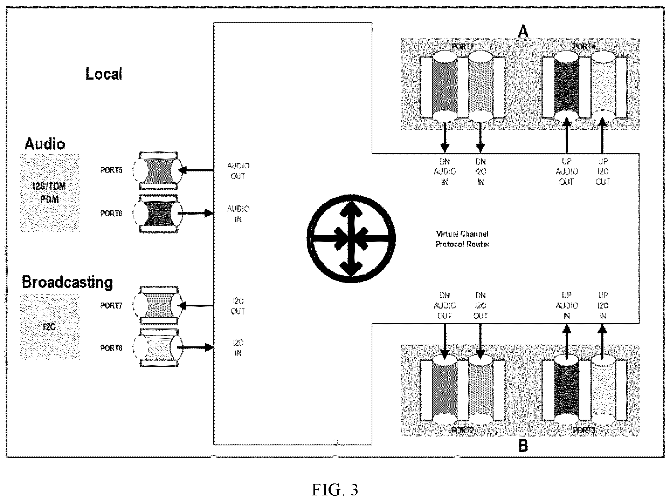

Refer to FIG. 3. FIG. 3 is a schematic structural diagram of a node device according to an embodiment of this application. As shown in FIG. 3, each node device comprises a plurality of device ports, for example, PORT1 to PORT8 in the figure. A function of the device port is determined by a function of each node device. A device port number is fixedly assigned to each device. Device ports are classified into a bus port and a local port. The bus port is a bidirectional differential serial data port that performs a control operation and data transmission by transferring a control frame and a data frame that are encoded through bidirectional Manchester encoding. As shown in FIG. 1 and FIG. 2, the bus port is connected to another node device by using the automotive audio network. The local interface is connected to another device. For example, A in FIG. 3 is an upstream port in the bus port, and B is a downstream port in the bus port.

Specifically, PORT1 in FIG. 3 is an upstream input port, and is configured to receive a packet frame transmitted by an upstream device; PORT2 is a downstream output port, and is configured to send a packet frame to a downstream device; PORT3 is a downstream input port, and is configured to receive a packet frame transmitted by a downstream device; and PORT4 is an upstream output port, and is configured to send a packet frame to an upstream device.

PORT5 is configured to transmit audio data to an audio (Audio) device, so that the audio device plays received audio data; and PORT6 is configured to receive data transmitted by the audio device. PORT7 is configured to transmit data to a radio (through Broadcasting), and PORT8 is configured to receive data transmitted by the radio (through Broadcasting).

Certainly, the node device may also be provided with a port for connecting a sensor for data collection, to receive data collected by the sensor.

It should be understood that there is only one master node device 11 in the topology network (for example, the automotive audio network). After each node device completes an initialization operation, the master node device 11 actively queries a device descriptor of another node device by using an enumeration operation, and configures a virtual channel configuration table of the another node device by using a configuration operation on a basis of the information. The master node device 11 inserts master node timestamp information into a data frame sent by the master node device 11. Other slave node devices correct respective clocks in the node devices based on the master node timestamp information.

After a system is powered on, the slave node device 12 initializes an initialization operation to a downstream port to verify that there is a node device accessed to the downstream port. In addition, after a response is obtained from the downstream port, the initialization operation of an upstream port is responded. The slave node device 12 responds to the enumeration operation initiated by the master node device 11, and feeds back a device descriptor of a current device to the master node device 11. When an enumeration operation and device descriptor feedback are performed between the master node device 11 and a non-adjacent slave node device 12, the enumeration operation and device descriptor feedback need to be complete through routing of a slave node device between the master node device 11 and the non-adjacent slave node device 12.

In the topology network provided in this embodiment of this application, two data frame structures are defined, to perform data transmission, which are respectively a control frame and a data frame.

Optionally, in a process of an initialization operation, an enumeration operation, and a configuration operation, the control frame is used. Sending the control frame does not depend on an audio transmission frequency, so that efficiency of control information interaction can be greatly improved. The data frame comprises a timestamp information segment, a broadcast data segment, and a non-broadcast data segment. The slave node device 12 may calibrate a local clock by using a timestamp of the master node device 11, to ensure a low latency characteristic of data transmission. The broadcast data segment may transmit sensor data in a time division multiplexing manner in an audio data transmission process. In addition, an uplink broadcast data segment may also be multiplexed as interrupt information uplink transmission. For each node device, a plurality of ports are defined. Data received by each port is distributed or combined through control of the virtual channel configuration table.

Refer to Table 1 below and Table 2 below. Table 1 below shows a possible format of a control frame.

**Table 1**

| 0 ~ 7 | 8 ~ 12 | 13 ~ 15 | 16 ~ 20 | 21 ~ 25 | 26 ~ 27 |
|---|---|---|---|---|---|
| Preamble | Sequence number | Frame mode | Source address | Destination address | Command |

**Continued from Table 1**

| | | | | | |
|---|---|---|---|---|---|
| 28 ~ 31 | 32 ~ 39 | ... | 40+8*N ~ 47+8*N | 48+8*N ~ 55+8*N | 56+8*N ~ 58+8*N |
| Load byte length | Load byte 0 | ... | Load byte N-1 | CRC check | Terminator |

Table 2 below is a structural description of the control frame shown in Table 1.

**Table 2**

| Start bit | End bit | Bit width | Name | Description | Scrambling status |
|---|---|---|---|---|---|
| 0 | 7 | 8 | Preamble | A preamble in a fixed format represents a start of a control frame or a data frame. | No |
| 8 | 12 | 5 | Sequence number | Sequence number of frame transmission. | No |
| | | | | Each time a new transmission is initiated, the sequence number progressively increases. A scrambling operation is not performed on sequence number information and frame mode data. A | |
| | | | | scrambling operation is performed on data after the frame mode data. | |
| | | | | Scrambling data is generated by using a serial shift register. An initial value of the serial shift register is generated based on the sequence number. | |
| | | | | Each node device may use initial values of different sequence numbers. The initial values of the sequence numbers cannot be all zero. | |
| 13 | 15 | 3 | Frame mode | Control modes of the control frame and the data frame. | No |
| | | | | 000: Control frame; 111: Data frame; Others: Reserved. | |
| | | | | If receiving reserved data, a receive end distinguishes the control frame from the data frame in a majority voting manner. For example, 001 is a control frame, and 110 is a data frame, which are distinguished based on a ratio of 0 to 1. | |
| 16 | 20 | 5 | Source address | Dynamic address or static address of a node device initiating this frame transmission | Yes |
| 21 | 25 | 5 | Destination address | Dynamic address or static address of a destination node device of this frame transmission | Yes |
| 26 | 27 | 2 | Command | Command of the control frame 00: Initialization; 01: Query; 10: Data transmission; 11: AANCD access | Yes |
| 28 | 31 | 4 | Load byte length | Equal to a quantity of load data bytes in a | Yes |
| | | | | current frame minus one. N is used to indicate the load byte length. | |
| 32 | 39 | 8 | Load byte 0 | First byte of load data | Yes |
| | ... | | | | |
| 40+N* 8 | 47+N* 8 | 8 | Load byte N | Last byte of the load data | Yes |
| 48+N* 8 | 55+N* 8 | 8 | CRC check | CRC check value of data from a source address to a load data terminal address | Yes |
| 56+N* 8 | 59+N* 8 | 4 | Terminator | Terminator in a fixed format | No |

Refer to Table 3 below and Table 4 below. Table 3 below shows a possible format of a data frame.

**Table 3**

| 0~7 | 8~12 | 13~15 | 16~31 | 32~39 | ... | 40+8*N ~ 47+8*N | 48+8*N ~ 51+8*N |
|---|---|---|---|---|---|---|---|
| Preamble | Sequence number | Frame mode | Timestamp | Load byte 0 | ... | Load byte N-1 | STOP |

Table 4 below is a structural description of the data frame shown in Table 3.

**Table 4**

| Start bit | End bit | Bit width | Name | Description | Scrambling status |
|---|---|---|---|---|---|
| 0 | 7 | 8 | Preamble | A preamble in a fixed format represents a start of a control frame or a data frame. | No |
| 8 | 12 | 5 | Sequence number | Sequence number of frame transmission. | No |
| | | | | Each time a new transmission is initiated, the sequence number progressively increases. | |
| | | | | A scrambling operation is not performed on sequence number information and frame mode data. A scrambling operation is performed on data after | |
| | | | | the frame mode data. Scrambling data is generated by using a serial shift register. An initial value of the serial shift register is generated based on the sequence number. | |
| 13 | 15 | 3 | Frame mode | Control modes of the control frame and the data frame. | No |
| | | | | 000: Control frame; 111: Data frame; Others: Reserved. | |
| | | | | If receiving reserved data, a receive end distinguishes the control frame from the data frame in a majority voting manner. For example, 001 is a control frame, and 110 is a data frame, which are distinguished based on a ratio of 0 to 1. | |
| 16 | 31 | 16 | Timestamp | When transmitting the data frame, a master node device loads a count value of a counter into the data frame as a timestamp of the data frame for transmission. | Yes |
| | | | | When forwarding the data frame, another device forwards the timestamp in the data frame. | |
| 32 | 39 | 8 | Load byte 0 | First byte of load data | Yes |
| | ... | | | | |
| 40+N* 8 | 47+N* 8 | 8 | Load byte N | Last byte of the load data | Yes |
| 48+N* 8 | 51+N* 8 | 4 | Terminator | Terminator in a fixed format | No |

For how to complete configurations of the topology network to ensure stable and efficient running of the topology network, a possible implementation is further provided in this embodiment of this application. Refer to the following description.

The master node device 11 and the slave node device 12 are configured to perform an initialization operation after being powered on, so that the master node device 11 determines a dynamic address of each node device in the topology network.

Optionally, by using the initialization operation, the master node device 11 may further determine a quantity of node devices in the topology network.

The master node device 11 and the slave node device 12 are further configured to perform an enumeration operation based on the dynamic address of each node device in the topology network after completing the initialization operation, so that the master node device obtains a port attribute of each node device in the topology network.

The master node device 11 and the slave node device 12 are further configured to perform a configuration operation based on the port attribute of each node device in the topology network after completing the enumeration operation, to complete setting a virtual channel configuration table of each node device in the topology network.

The virtual channel configuration table comprises a virtual channel descriptor for data transmission at each port in the node device, and the virtual channel descriptor comprises corresponding port and/or data location information.

Optionally, the virtual channel descriptor further comprises a corresponding virtual channel number, and the data location information indicates a storage location of data that needs to be extracted corresponding to the virtual channel descriptor in a data frame.

The master node device 11 and the slave node device 12 are further configured to perform data transmission based on the virtual channel configuration table after completing the configuration operation.

It should be understood that the virtual channel configuration table configured on each node device is used to control data forwarding, thereby efficiently using bandwidth of a serial data line.

In an optional implementation, the master node device 11 is further configured to generate a corresponding virtual channel descriptor based on the port attribute of each node device in the topology network.

Refer to Table 5. Table 5 shows a possible description of a virtual channel descriptor.

**Table 5**

| | | Virtual channel number | Start location | Data length | Source port number | Destination port number |
|---|---|---|---|---|---|---|
| Master node device | Virtual channel 0 descriptor | 0 | 32 | 64 | 6 | 2 |
| | Virtual channel 1 descriptor | 1 | 32 | 64 | 3 | 5 |
| No. 1 slave node device | Virtual channel 0 descriptor | 0 | 32 | 32 | 1 | 5 |
| | Virtual channel 1 descriptor | 1 | 64 | 16 | 6 | 2 |
| No. 2 slave node device | Virtual channel 0 descriptor | 0 | 32 | 32 | 1 | 5 |
| | Virtual channel 1 descriptor | 1 | 64 | 32 | 6 | 4 |
| No. 3 slave node device | Virtual channel 0 descriptor | 0 | 32 | 16 | 1 | 5 |
| | Virtual channel 1 descriptor | 1 | 32 | 32 | 6 | 4 |

Optionally, a corresponding virtual channel descriptor is disposed for each node device. The virtual channel descriptor comprises corresponding port and data location information, and a corresponding virtual channel number. The data start location and the data length in the table are used to describe the data location information together. Data corresponding to a virtual channel is transmitted from a source port to a destination port.

It should be noted that the source port number and the destination port number in Table 5 may be but are not limited to ports in the node devices shown in FIG. 3.

It should be understood that a virtual channel descriptor of the master node device 11 may be directly stored in a corresponding virtual channel configuration table, and does not need to be transmitted to the another node device. To implement a virtual channel configuration of another device, a virtual channel descriptor of the another slave node device 12 needs to be sent to a corresponding slave node. For details, refer to the following description.

The master node device 11 is further configured to send a configuration request frame to the destination node device, the configuration request frame comprises address information of the destination node device and at least one virtual channel descriptor of the destination node device, and the destination node device is any slave node device 12.

Optionally, the address information of the destination node device may be a dynamic address determined in an initialization process, or may be a static address. This is not limited herein.

When receiving the configuration request frame transmitted by the master node device 11, the slave node device 12 parses destination address information, namely, the address information of the destination node device, in the configuration request frame. If the destination address information matches an address of the slave node device 12, a configuration is performed based on the configuration request frame. If the destination address information does not match the address of the slave node device 12, the configuration request frame is forwarded to a downstream device by using a downstream port.

Optionally, the master node device 11 generates a corresponding virtual channel configuration table based on the virtual channel descriptor corresponding to the destination node device, and transmits the virtual channel configuration table to the destination node device by using the configuration request frame. The virtual channel configuration table comprises at least one virtual channel descriptor corresponding to the destination node device.

Refer to Table 6 below and Table 7 below. Table 6 shows a possible structure of a configuration request frame.

**Table 6**

| 0~7 | 8~12 | 13~15 | 16~20 | 21~25 | 26~27 | 28~31 | 32~39 |
|---|---|---|---|---|---|---|---|
| Preamble | Sequence number | Frame mode | Source address | Destination address | Command | Load byte length | Load byte 0 |
| Preamble | 0xX | 000 | 00000 | 0010 | 10 | n | Quantity of ports |
| | | | | | | | |
| 40~47 | ... | | | 40+8*N ~ 47+8*N | | 48+8*N ~ 55+8*N | 56+8*N ~ 58+8*N |
| Load byte 1 | ... | | | Load byte N-1 | | CRC check | Terminator |
| Virtual channel configuration table | | | | | | 0xXX | Terminator |

Table 7 below shows a structural description of the configuration request frame shown in Table 6.

**Table 7**

| **Configuration request frame** | | |
|---|---|---|
| **Name** | **Assignment** | **Description** |
| Preamble | Preamble | Preamble in a fixed format. |
| Sequence number | 0xX | Sequence number. Initial values of sequence numbers are not all zero. |
| Frame mode | 000 | Control frame |
| Source address | 00000 | The source address is 0, and a source node device is a master node device |
| Destination address | 00010 | The destination address is 2, and a destination node device is a device with a dynamic address of 2 |
| Command | 10 | Configuration operation. |
| Load byte length | 0xXX | Quantity of load bytes of the configuration request frame |
| Load byte 0 | 0x05 | Quantity of virtual channels to be configured currently |
| Load byte 1 | 0xXX | Virtual channel configuration table |
| ... | | |
| Load byte N | 0xXX | |
| CRC check | 0xXX | Depends on an initial value of a linear shift register. |
| Terminator | Terminator | Terminator in a fixed format. |

Refer to Table 8. Table 8 is a structural description of a virtual channel configuration table according to an embodiment of this application.

**Table 8**

| 7 | 6 | 5 | 4 | 3 | 2 | 1 | 0 |
|---|---|---|---|---|---|---|---|
| Virtual channel number | | | | Virtual channel data start location [11:8] | | | |
| Virtual channel data start location [7:0] | | | | | | | |
| Virtual channel data length [7:0] | | | | | | | |
| Reserved | | | Source port number | | | | |
| Reserved | | | Destination port number | | | | |
| Virtual channel number | | | | Virtual channel data start location [11:8] | | | |
| Virtual channel data start location [7:0] | | | | | | | |
| Virtual channel data length [7:0] | | | | | | | |
| Reserved | Source port number | | | | | | |
| Reserved | Destination port number | | | | | | |
| ... | | | | | | | |

As shown in Table 6, the load byte 1 to the load byte N-1 are used to record the virtual channel configuration table corresponding to the destination node device. Referring to Table 8, it may be learned that every five bytes indicate one virtual channel descriptor. Affected by a quantity of load bytes, a quantity of virtual channel descriptors comprised in a virtual channel configuration table for single transmission is limited. For example, in one time of configuration operation, a maximum of three virtual channels may be configured.

When a total quantity of to-be-configured virtual channels of the destination node device is greater than a quantity upper limit of a single configuration, a virtual channel configuration may be performed for a plurality of times.

The destination node device is further configured to set, based on the virtual channel descriptor in the configuration request frame, the virtual channel configuration table stored in the destination node device after receiving the configuration request frame.

Optionally, the virtual channel configuration table in the configuration request frame is obtained, and stored as the virtual channel configuration table of the destination node device. Alternatively, the virtual channel descriptor in the configuration request frame is parsed, and the virtual channel configuration table stored in the destination node device is updated.

To ensure that virtual channel configuration can be accurately complete, an optional implementation is further provided in this embodiment of this application. For details, refer to the following description.

The configuration request frame further comprises the total quantity of the to-be-configured virtual channels of the destination node device, for example, a quantity recorded by load bytes 0 in the configuration request frame.

The destination node device is further configured to feed back a configuration response acknowledgment frame to the master node device 11 after receiving the configuration request frame, wherein the configuration response acknowledgment frame comprises the address information of the destination node device, address information of the master node device, and a configuration status identifier.

When receiving the configuration response acknowledgment frame fed back by the destination node device, the another slave node device 12 forwards the configuration response acknowledgment frame based on a destination address, namely, the address information of the master node device 11, in the configuration response acknowledgment frame, so that the master node device 11 obtains the configuration response acknowledgment frame fed back by the destination node device.

The configuration response acknowledgment frame is only intended to prompt the master node device 11 to deliver a new configuration request based on a remaining unconfigured virtual channel descriptor. The configuration status identifier indicates that a configuration is complete (for example, a remaining unconfigured quantity is 0) or that the configuration is not complete (for example, the remaining unconfigured quantity is not equal to 0).

Certainly, the configuration status identifier may alternatively directly indicate a remaining unconfigured quantity.

Refer to Table 9 below and Table 10 below. Table 9 below shows a possible structure of a configuration response acknowledgment frame.

**Table 9**

| 0~7 | 8~12 | 13~15 | 16~20 | 21~25 |
|---|---|---|---|---|
| Preamble | Sequence number | Frame mode | Source address | Destination address |
| Preamble | 0xX | 000 | 00000 | 00000 |
| 26~27 | 28~31 | 32~39 | 40~47 | 48~51 |
| Command | Load byte length | Load byte 0 | CRC | Terminator |
| 00 | 0 | 0xA2 | 0xXX | Terminator |

Table 10 below is a structural description of the configuration response acknowledgment frame shown in Table 9.

**Table 10**

| Configuration response acknowledgment frame | | |
|---|---|---|
| Name | Assignment | Description |
| Preamble | Preamble | Preamble in a fixed format. |
| Sequence number | 0xX | Sequence number. Initial values of sequence numbers are not all zero. |
| Frame mode | 000 | Control frame. |
| Source address | 00010 | A source address and a destination address of a response frame are swapped. |
| Destination address | 00000 | A source address and a destination address of a response frame are swapped. |
| Command | 10 | Configuration operation. |
| Load byte length | 0x0 | The load byte length is 0, and there is only one load byte. |
| Load byte 0 | 0xA3 | If Bit 7:5=101, a response is acknowledged. |
| | | If Bit 4:0=3, a node device with a dynamic address 2 further has three virtual channels that are not configured with a virtual channel configuration table, that is, a remaining unconfigured quantity=3. |
| CRC check | 0xXX | Depends on an initial value of a linear shift register. |
| Terminator | Terminator | Terminator in a fixed format. |

The master node device 11 is further configured to: after receiving the configuration response acknowledgment frame, if determining that the configuration status identifier represents that a virtual channel configuration of the destination node device is not complete, generate a new configuration request frame based on a remaining virtual channel descriptor of the destination node device, and send the new configuration request frame to the destination node device until a configuration status identifier in a received configuration response acknowledgment frame represents that the virtual channel configuration of the destination node device is complete.

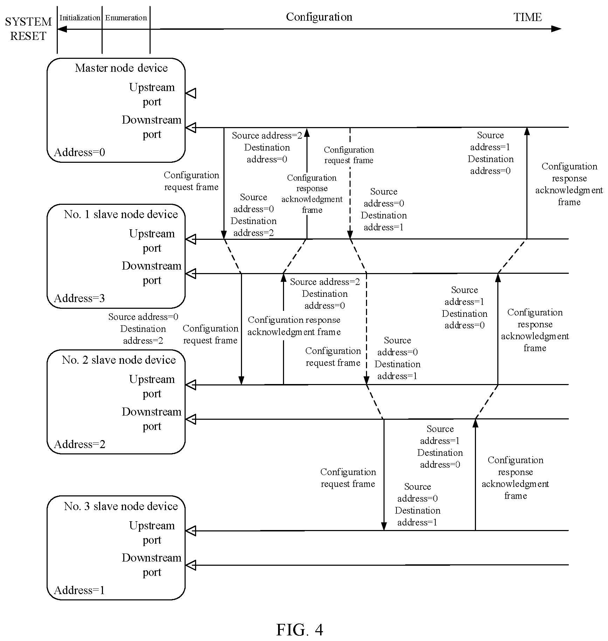

Optionally, refer to FIG. 4. FIG. 4 is a schematic diagram of a configuration process according to an embodiment of this application. As shown in FIG. 4, when receiving the configuration request frame, the slave node device 12 forwards the configuration request frame by using a downstream port if the destination address does not match, or generates the configuration response acknowledgment frame if the destination address matches. Similarly, the slave node device 12 also forwards the configuration response acknowledgment frame, so that the master node device 11 can obtain the configuration response acknowledgment frame fed back by all the slave node devices 12. It should be noted that the address shown in FIG. 4 is only used as an example, and is not intended to be a limitation.

In an optional implementation, after the configuration operation is complete, a data frame may be transmitted between the node devices. After data to be sent by the master node device to a bus is prepared, data frame transmission may be initiated. As shown in Table 3 and Table 4, data bits 0 to 31 in a data frame are specially reserved for broadcast data. The data frame may further carry non-broadcast data, for example, data corresponding to each virtual channel. Specifically, data corresponding to different virtual channels is stored at different locations in the data frame. Specifically, data placement may be performed based on data location information corresponding to a virtual channel descriptor.

Optionally, non-broadcast data transmission comprises but is limited to six possible forms. Refer to Table 11. Table 11 shows descriptions of types and configurations of non-broadcast data transmission.

**Table 11**

| Type | Description | Virtual channel configuration table | |
|---|---|---|---|
| | | Source port | Destination port |
| 1 | Data from an upstream input port of a bus is forwarded to a downstream output port of the bus. | Default operation, not defined in a virtual channel configuration table | |
| 2 | Data from a downstream input port of the bus is forwarded to an upstream output port of the bus | | |
| 3 | Data from the upstream input port of the bus is forwarded to a local output port. | Upstream input | Local output |
| 4 | Data from the downstream input port of the bus is forwarded to the local output port | Downstre am output | Local output |
| 5 | An insertion data stream of data from a local input port is sent to the upstream output port of the bus | Local input | Upstream output |
| 6 | An insertion data stream of data from the local input port is sent to the downstream output port of the bus | Local input | Downstrea m output |

It should be noted that data not defined in the virtual channel configuration table is transmitted based on the type 1 and the type 2.

If data starting from a 32nd-bit in a data frame needs to be forwarded to another port, the data needs to be defined in the virtual channel configuration table. The virtual channel configuration table is configured by the master node device 11 into each slave node device 12. Each slave node device 12 performs data forwarding based on a configuration in the virtual channel configuration table. Using FIG. 1 and FIG. 3 as an example, each slave node device 12 has a local audio input and output. In an application, the virtual channel descriptor shown in Table 5 indicates that a 32-bit audio sent out by the master node device 11 is played by the No. 2 slave node device and the No. 1 slave node device, and a 16-bit audio collected by the No. 1 slave node device is played by the No. 3 slave node device. A 32-bit audio collected by the No. 2 slave node device and the No. 3 slave node device is sent to the master node device 11.

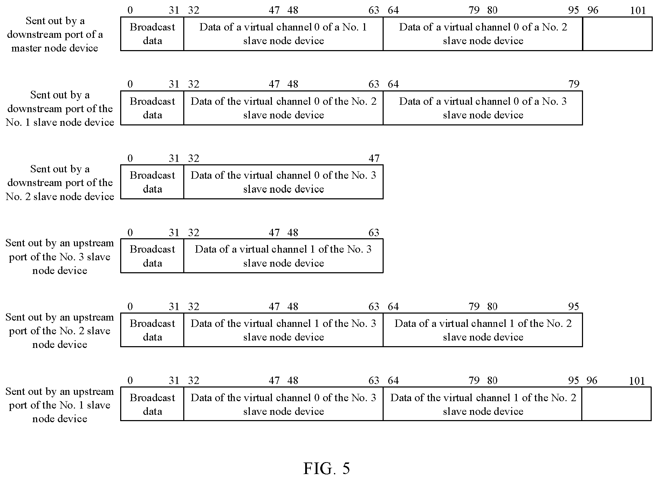

Specifically, refer to FIG. 5. FIG. 5 is a schematic diagram of a data format sent out by each node device corresponding to the virtual channel descriptors shown in Table 5 according to an embodiment of this application.

As shown in FIG. 5, the master node device 11 sends out a data frame by using a downstream port, and an upstream input port (with a source port number 1) of the No. 1 slave node device 12 receives the data frame. It should be understood that the data frame does not comprise destination address information and is non-directional data. The upstream input port of the No. 1 slave node device 12 is corresponding to a virtual channel 0 of the No. 1 slave node device 12, and a corresponding data start location is 32 bits and a data length is 32 bits. The No. 1 slave node device 12 extracts, from the received data frame, destination data corresponding to a start location of 32 bits and a data length of 32 bits, and sends the destination data to a port with a destination port number 5 corresponding to the virtual channel 0 of the No. 1 slave node device 12. In an embodiment, the No. 1 slave node device 12 further sends out, by using a downstream port of the No. 1 slave node device 12, the data frame obtained after the destination data corresponding to the No. 1 slave node device 12 is deleted, so that the No. 2 slave node device 12 receives the data frame. A delivery processing process of the No. 2 slave node device 12 is the same as that of the No. 1 slave node device 12 until the data frame reaches the No. 3 slave node device 12 at the end.

Still refer to FIG. 5. The slave node device 12 further uploads data based on each virtual channel descriptor in a corresponding virtual channel configuration table, and this process is the same as that of delivering. Details are not described herein again.

**In** an optional implementation, when receiving non-directional data (the data frame in this embodiment of this application) at a destination port, the slave node device 12 is further configured to determine, based on the virtual channel configuration table stored in the slave node device 12, whether a destination descriptor exists; and if the destination descriptor exists, process the received data based on the destination descriptor; or if the destination descriptor does not exist, send the received data to a default matching port of the destination port.

The destination port is any port of the slave node device, and the destination descriptor is a virtual channel descriptor comprising the destination port.

Optionally, the processing the received data based on the destination descriptor specifically comprises:
extracting data (namely, destination data) corresponding to a destination descriptor in a current data frame, and determining whether data corresponding to another virtual channel descriptor exists in the current data frame; and if the data corresponding to the another virtual channel descriptor exists, sending an extracted data frame by using the default matching port of the destination port.

Optionally, after the data corresponding to the destination descriptor in the current data frame is extracted, the extracted data is deleted from the current data frame, and a forward shift and padding operation is performed on the data corresponding to the another virtual channel descriptor, to obtain the extracted data frame.

Optionally, the another virtual channel descriptor is a virtual channel descriptor corresponding to another port.

The destination data corresponding to the destination descriptor is extracted from the received data frame, and then the destination data is sent to a port with a destination port number corresponding to the destination descriptor, and the data frame obtained after the destination data is deleted is sent out by using a downstream port.

Alternatively, data received by a local port (with a source port number in the destination descriptor) is added to an uplink data frame based on a contract of the destination descriptor, and is sent out by using an upstream port.

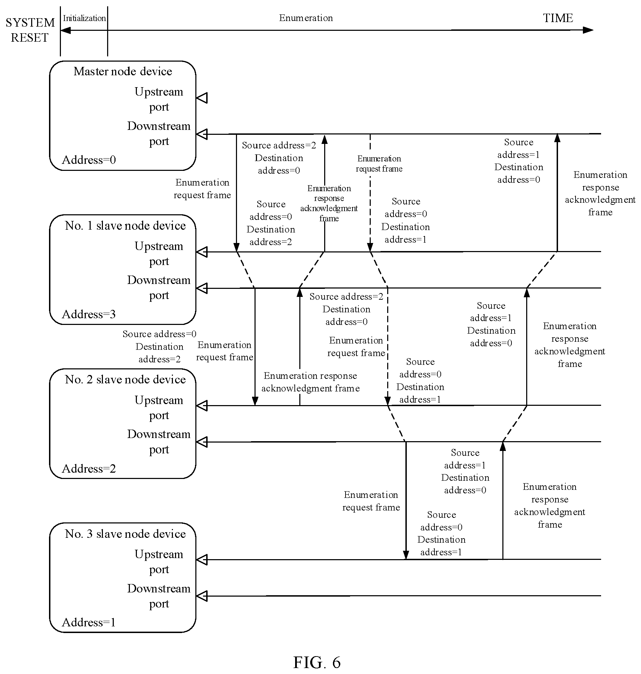

Optionally, for how to implement the enumeration operation, this embodiment of this application further provides a possible implementation. Refer to FIG. 6. FIG. 6 is an example diagram of an enumeration process according to an embodiment of this application. An enumeration request frame and an enumeration response acknowledgment frame shown in FIG. 6 are control frames.

After the initialization operation ends, the master node device 11 sequentially initiates an enumeration request operation, that is, sends an enumeration request frame to each slave node device 12 or a backup master node device. Each enumeration request frame comprises a dynamic address or a static address of one slave node device 12. In this case, each enumeration request operation is for only one node device.

When a node device receives an enumeration request frame from an upstream port and a dynamic address matches, the node device immediately sends an enumeration response acknowledgment frame. Otherwise, the node device forwards the enumeration request frame to a downstream port and starts a wait timer and a timeout timer. When the wait timer reaches TDEFER, a current node device sends an enumeration response waiting frame to the upstream port. When the timeout timer reaches TTIMEOUT, the current node device sends an enumeration response timeout frame to the upstream port.

When receiving the enumeration response acknowledgment frame from a downstream port, a node device determines whether the dynamic address matches. If the dynamic address does not match, forwarding is performed by using the upstream port, so that the master node device 11 can obtain an enumeration response acknowledgment frame of each slave node device 12. It should be noted that the enumeration response acknowledgment frame also comprises the source address and the destination address.

Refer to Table 12 below and Table 13 below. Table 12 shows a possible structure of an enumeration request frame.

**Table 12**

| 0~7 | 8~12 | 13~15 | 16~20 | 21~25 | 26~27 | 28~31 | 32~39 |
|---|---|---|---|---|---|---|---|
| Preamble | Sequence number | Frame mode | Source address | Destination address | Command | Load byte length | Load byte 0 |
| Preamble | 0xX | 000 | 00000 | 00010 | 01 | 0 | 0x01 |
| | | | | | | | |
| 40~47 | | 48~51 | | | | | |
| CRC check | | Terminator | | | | | |
| 0xXX | | Terminator | | | | | |

Table 13 below is a structural description of the enumeration request frame shown in Table 12.

**Table 13**

| Enumeration request | | |
|---|---|---|
| Name | Assignment | Description |
| Preamble | Preamble | Preamble in a fixed format. |
| Sequence number | 0xX | Sequence number. Initial values of sequence numbers are not all zero. |
| Frame mode | 000 | Control frame. |
| Source address | 00000 | The source address is 0, and a source node device is a master node device. |
| Destination address | 00010 | The destination address is 2, and a destination node device is a device with a dynamic address of 2. |
| Command | 00 | Initialization operation. |
| Load byte length | 0x0 | The load byte length is 0, and there is only one load byte. |
| Load byte 0 | 0x0X | 0x01: Obtain a device descriptor of a node device from the beginning. |
| | | 0x02: Continue to obtain the device descriptor of the node device. |
| CRC check | 0xXX | Depends on an initial value of a linear shift register. |
| Terminator | Terminator | Terminator in a fixed format. |

Refer to Table 14 below and Table 15 below. Table 14 shows a possible structure of an enumeration response waiting frame.

**Table 14**

| 0~7 | 8~12 | 13~15 | 16~20 | 21~25 | 26~27 | 28~31 | 32~39 |
|---|---|---|---|---|---|---|---|
| Preamble | Sequence number | Frame mode | Source address | Destination address | Command | Load byte length | Load byte 0 |
| Preamble | 0xX | 000 | 00010 | 00000 | 01 | 0 | 0x40 |
| | | | | | | | |
| 40~47 | | 48~51 | | | | | |
| CRC check | | Terminator | | | | | |
| 0xXX | | Terminator | | | | | |

Table 15 below shows a structural description of the enumeration response waiting frame shown in Table 16.

**Table 16**

| Enumeration response-waiting | | |
|---|---|---|
| Name | Assignment | Description |
| Preamble | Preamble | Preamble in a fixed format. |
| Sequence number | 0xX | Sequence number. Initial values of sequence numbers are not all zero. |
| Frame mode | 000 | Control frame. |
| Source address | 00010 | A source address and a destination address of a response frame are swapped. |
| Destination address | 00000 | A source address and a destination address of a response frame are swapped. |
| Command | 01 | Enumeration operation. |
| Load byte length | 0x0 | The load byte length is 0, and there is only one load byte. |
| Load byte 0 | 0x40 | In response to initialization enumeration, a current node device does not receive a downstream acknowledgment response or does not find that an |
| | | .operation times out. If Bit 7:5=010, wait for a response. |
| CRC check | 0xXX | Depends on an initial value of a linear shift register. |
| Terminator | Terminator | Terminator in a fixed format. |

Refer to Table 17 below and Table 18 below. Table 17 shows a possible structure of an enumeration response acknowledgment frame.

**Table 17**

| 0∼7 | 8∼12 | 13~15 | 16~20 | 21~25 | 26~27 | 28~31 | 32~39 |
|---|---|---|---|---|---|---|---|
| Preamble | Sequence number | Frame mode | Source address | Destinatio n address | Command | Load byte length | Load byte 0 |
| Preamble | 0xX | 000 | 00010 | 0000 | 01 | N | 0xA5 |
| | | | | | | | |
| 40~47 | ... | | | 40+8*N ~ 47+8*N | | 48+8*N ~ 55+8*N | 56+8*N ~ 58+8*N |
| Load byte 1 | ... | | | Load byte N-1 | | CRC check | Terminator |
| Device descriptor | | | | | | 0xXX | Terminator |

Table 18 below shows a structural description of the enumeration response acknowledgment frame shown in Table 17.

**Table 18**

| Enumeration response **acknowledgment** | | |
|---|---|---|
| Name | **Assignment** | **Description** |
| Preamble | Preamble | Preamble in a fixed format. |
| Sequence number | 0xX | Sequence number. Initial values of sequence numbers are not all zero. |
| Frame mode | 000 | Control frame. |
| Source address | 00010 | A source address and a destination address of a response frame are swapped. |

| Destination address | 00000 | A source address and a destination address of a response frame are swapped. |
|---|---|---|
| Command | 01 | Enumeration operation. |
| Load byte length | 3*M | Quantity of device descriptor bytes in a current response. |
| Load byte 0 | 0xA6 | If Bit 7:5=101, a response is acknowledged. |
| | | If Bit 4:0=6, device descriptors of six ports of a node device with a dynamic address 2 are to be replied. |
| Load byte 1 | 0xXX | Device descriptor of the node device with the dynamic address 2. |
| ... | ... | |
| Load byte N | 0xXX | |
| CRC check | 0xXX | Depends on an initial value of a linear shift register. |
| Terminator | Terminator | Terminator in a fixed format. |

It should be noted that the enumeration response acknowledgment frame comprises a device descriptor of a node device. Device descriptors are shown in Table 19.

**Table 19**

| 7 | 6 | 5 | 4 | 3 | 2 | 1 | 0 |
|---|---|---|---|---|---|---|---|
| Port number | | | | | Port type | | |
| Port feature byte 0 | | | | | | | |
| Port feature byte 1 | | | | | | | |
| Port number | | | | | Port type | | |
| Port feature byte 0 | | | | | | | |
| Port feature byte 1 | | | | | | | |
| Port number | | | | | Port type | | |
| Port feature byte 0 | | | | | | | |
| Port feature byte 1 | | | | | | | |
| ... | | | | | | | |

During performing the enumeration operation, a maximum quantity of bytes that the enumeration response acknowledgment frame can reply to the device descriptor is 15 bytes, and device descriptors of a maximum of five ports can be returned at a time. When the master device node finds that a quantity of ports responded by a node device does not match a quantity of ports in a subsequent node descriptor, the master node device should send out an enumeration request frame again, and the load byte 0 is 2, indicating that the enumeration operation continues. An accessed node device continues to feed back a node descriptor of a remaining port to the master node device by using an enumeration response acknowledgment frame.

Refer to Table 20 and Table 21. Table 20 shows a port type list. Table 21 shows a port feature list.

**Table 20**

| Port type | |
|---|---|
| 0 | Upstream port of a bus |
| 1 | Downstream port of the bus |
| 2 | Audio input port |
| 3 | Audio output port |
| 4 | I2C control port |
| 5 | PWM port |
| Others | Reserved |

**Table 21**

| Port features | | | | |
|---|---|---|---|---|
| Audio input port Audio output port | Byte 0 | Bit 7:4 | Sampling rate | 0: 16 KHz 8 KHz |
| | | | | 1: 32 KHz |
| | | | | 2: 48 KHz |
| | | | | 4: 96 KHz |
| | | | | 4: 192 KHz |
| | | | | Others: Reserved |
| | | Bit 3:0 | Sound channel quantity | 0: Single sound channel |
| | | | | 1: Stereo |
| | | | | ... |
| | | | | 7:8 sound channel |
| | | | | ... |
| | | | | 15:16 sound channel |
| | Byte 1 | Bit 7:5 | Data bit width | 0:16 bits |
| | | | | 1:20 bits |
| | | | | 2:24 bits |
| | | | | 3:32 bits |
| | | Bit 4:3 | Compression mode | 0: Does not support quantization compression |
| | | | | 1: Supports quantization compression |
| | | | | Others: Reserved |
| | | Bit 2:0 | Data protection mode | 0: Does not support data integrity protection |
| | | | | 1: Parity check mode |
| | | | | 2: 4-bit CRC mode |
| | | | | 3: Reed-soloman mode |
| | | | | Others: Reserved |
| I2C control port | Byte 0 | Bit 7 | I2C port features | 0: I2C master |
| | | | | 1: I2C slave |
| | | Bit 6:0 | I2C port speeds | 0: 100 KHz |
| | | | | 1: 200 KHz |
| | | | | 2: 400 KHz |
| | | | | Others: Reserved |
| | Byte 1 | Bit 7:1 | I2C device address | 7-bit I2C device address |
| | | 0 | Reserved | Reserved |
| PWM control port | TBD | | | |
| GPIO | | | | |

It should be understood that the device descriptor comprises the port attribute of each node device, for example, a port number, a port type, and a port feature.

In conclusion, this embodiment of this application provides the topology network, comprising a master node device and at least one slave node device, wherein the master node device and the at least one slave node device are connected in sequence; the master node device and the slave node device are configured to perform an initialization operation after being powered on, so that the master node device determines a dynamic address of each node device in the topology network; the master node device and the slave node device are further configured to perform an enumeration operation based on the dynamic address of each node device in the topology network after completing the initialization operation, so that the master node device obtains a port attribute of each node device in the topology network; the master node device and the slave node device are further configured to perform a configuration operation based on the port attribute of each node device in the topology network after completing the enumeration operation, to complete setting a virtual channel configuration table of each node device in the topology network; the virtual channel configuration table comprises a virtual channel descriptor for data transmission at each port in the node device, and the virtual channel descriptor comprises corresponding port and/or data location information; and the master node device and the slave node device are further configured to perform data transmission based on the virtual channel configuration table after completing the configuration operation. After the configuration operation is complete, the topology network can run stably and efficiently. **In** the topology network comprising a serial connection or a ring connection by using the differential line, a frame structure is constructed for data transmission, and data forwarding is controlled by using the virtual channel configuration table, to efficiently use bandwidth of serial transmission.

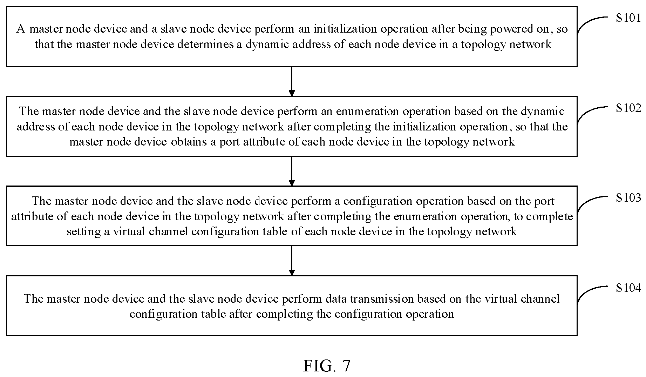

An embodiment of this application further provides a topology network management method, which may be applied to, but not limited to, the topology network shown in FIG. 1 and FIG. 2. Specifically, referring to FIG. 7, the topology network management method comprises S101, S102, S103, and S104. Details are described below.

S101. A master node device and a slave node device perform an initialization operation after being powered on, so that the master node device determines a dynamic address of each node device in the topology network.

S102. The master node device and the slave node device perform an enumeration operation based on the dynamic address of each node device in the topology network after completing the initialization operation, so that the master node device obtains a port attribute of each node device in the topology network.

S103. The master node device and the slave node device perform a configuration operation based on the port attribute of each node device in the topology network after completing the enumeration operation, to complete setting a virtual channel configuration table of each node device in the topology network.

The virtual channel configuration table comprises a virtual channel descriptor for data transmission at each port in the node device, and the virtual channel descriptor comprises corresponding port and/or data location information.

S104. The master node device and the slave node device perform data transmission based on the virtual channel configuration table after completing the configuration operation.

In an optional implementation, S103 comprises: The master node device generates a corresponding virtual channel descriptor based on the port attribute of each node device in the topology network;
the master node device sends a configuration request frame to a destination node device, wherein the configuration request frame comprises address information of the destination node device and at least one virtual channel descriptor of the destination node device, and the destination node device is any slave node device; and
the destination node device sets, based on the virtual channel descriptor in the configuration request frame, the virtual channel configuration table stored in the destination node device after receiving the configuration request frame.

In an optional implementation, the configuration request frame further comprises a total quantity of the to-be-configured virtual channels of the destination node device, and S103 further comprises:
The destination node device feeds back a configuration response acknowledgment frame to the master node device after receiving the configuration request frame, wherein the configuration response acknowledgment frame comprises the address information of the destination node device, address information of the master node device, and a configuration status identifier; and
after receiving the configuration response acknowledgment frame, if determining that the configuration status identifier represents that a virtual channel configuration of the destination node device is not complete, the master node device generates a new configuration request frame based on a remaining virtual channel descriptor of the destination node device, and sends the new configuration request frame to the destination node device until a configuration status identifier in a received configuration response acknowledgment frame represents that the virtual channel configuration of the destination node device is complete.

In an optional implementation, the topology network management method further comprises: When receiving non-directional data at a destination port, the slave node device determines, based on the virtual channel configuration table stored on the slave node device, whether a destination descriptor exists; and if the destination descriptor exists, processes the received data based on the destination descriptor; or if the destination descriptor does not exist, sends the received data to a default matching port of the destination port, wherein the destination port is any port of the slave node device, and the destination descriptor is a virtual channel descriptor comprising the destination port.

Optionally, the processing the received data based on the destination descriptor comprises: extracting data corresponding to a destination descriptor in a current data frame, and determining whether data corresponding to another virtual channel descriptor exists in the current data frame; and if the data corresponding to the another virtual channel descriptor exists, sending an extracted data frame by using the default matching port of the destination port.

Optionally, after the data corresponding to the destination descriptor in the current data frame is extracted, the extracted data is deleted from the current data frame, and a forward shift and padding operation is performed on the data corresponding to the another virtual channel descriptor, to obtain the extracted data frame.

It should be noted that in the topology network management method provided in this embodiment, the function usage shown in the foregoing topology network embodiment may be executed, to implement a corresponding technical effect. For brief description, for a part not mentioned in this embodiment, reference may be made to corresponding content in the foregoing embodiment.

The foregoing descriptions are merely exemplary embodiments of this application, and are not intended to limit this application. A person skilled in the art may make various modifications and changes to this application. Any modification, equivalent replacement, or improvement made without departing from the spirit and principle of this application shall fall within the protection scope of this application.

It is obvious to a person skilled in the art that this application is not limited to the details of the above exemplary embodiments, and that this application may be implemented in other specific forms without departing from the spirit or basic features of this application. The embodiments should be regarded as exemplary and non-limiting in every respect, and the scope of this application is defined by the appended claims rather than the above description. Therefore, all changes falling within the meaning and scope of equivalent elements of the claims should be comprised in this application. The reference numeral in the claims should not be considered as limiting the involved claims.

## Claims

1. A topology network, wherein the topology network comprising a master node device and at least one slave node device, the master node device and at least one slave node device are connected in sequence;
the master node device and the slave node device are configured to perform an initialization operation after being powered on, so that the master node device determines a configuration operation based on the dynamic address of each node device in the topology network;
after completing the initialization operation, the master node device and the slave node device are further configured to perform a configuration operation based on the port attribute of each node device in the topology network after completing the enumeration operation, so that the master node device obtains a port attribute of each node device in the topology network;
after completing the enumeration operation, the master node device and the slave node device are further is configured to perform a configuration operation based on the port attribute of each node device in the topology network to complete setting a virtual channel configuration table of each node device in the topology network; wherein the virtual channel configuration table comprises a virtual channel descriptor data transmission for each port in the node device, and the virtual channel descriptor comprises corresponding port and/or data location information;
the master node device and the slave node device are further configured to perform data transmission based on the virtual channel configuration table after completing the configuration operation.

2. The topology network according to claim 1, wherein the master node device is further configured to generate a corresponding virtual channel descriptor based on the port attribute of each node device in the topology network;
the master node device is further configured to send a configuration request frame to a destination node device, wherein the configuration request frame comprises address information of the destination node device and at least one virtual channel descriptor of the destination node device, and the destination node device is any slave node device;
the destination node device is further configured to set a virtual channel configuration table stored in the destination node device based on the virtual channel descriptor in the configuration request frame after receiving the configuration request frame.

3. The topology network according to claim 2, wherein the configuration request frame further comprises a total quantity of to-be-configured virtual channels of the destination node device;
the destination node device is further configured to feed back a configuration response acknowledgment frame to the master node device after receiving the configuration request frame, wherein the configuration response acknowledgment frame comprises the address information of the destination node device, address information of the master node device, and a configuration status identifier; and
the master node device is further configured to: after receiving the configuration response acknowledgment frame, if determining that the configuration status identifier represents that a virtual channel configuration of the destination node device is not complete, generate a new configuration request frame based on a remaining virtual channel descriptor of the destination node device, and send the new configuration request frame to the destination node device until a configuration status identifier in a received configuration response acknowledgment frame represents that the virtual channel configuration of the destination node device is complete.

4. The topology network according to claim 1, wherein when receiving non-directional data at a destination port, the slave node device is further configured to determine, based on a stored virtual channel configuration table stored in the slave node device, whether a destination descriptor exists; and if the destination descriptor exists, process the received data based on the destination descriptor; or if the destination descriptor does not exist, send the received data to a default matching port of the destination port; wherein the destination port is any port of the slave node device, the destination descriptor is a virtual channel descriptor comprising the destination port.

5. The topology network according to claim 4, the processing the received data based on the destination descriptor comprises: extracting data corresponding to a destination descriptor in a current data frame, and determining whether data corresponding to another virtual channel descriptor exists in the current data frame; and if the data corresponding to the another virtual channel descriptor exists, sending an extracted data frame by using the default matching port of the destination port.

6. The topology network according to claim 5, wherein after the data corresponding to the destination descriptor in the current data frame is extracted, the extracted data is deleted from the current data frame, and a forward shift and padding operation is performed on the data corresponding to the another virtual channel descriptor, to obtain the extracted data frame.

7. The topological network according to claim 1, wherein the topological network is a serial topological network, a downstream port of the main node device is connected to an upstream port of the first slave node device, and an upstream port of an ith slave node device is connected to a downstream port of the (i-1)th slave node device, the downstream port of the nth slave node device is suspended, wherein 2≤i≤n, n is the number of the slave node devices.

8. The topological network according to claim 1, wherein the topological network is a serial topological network, a downstream port of the main node device is connected to an upstream port of the first slave node device, and an upstream port of an ith slave node device is connected to a downstream port of the (i-1)th slave node device, the downstream port of the nth slave node device is connected to the upstream port of the main node device, wherein 2≤i≤n, n is the number of the slave node devices.

9. A topology network management method, wherein applied to a topology network, the topology network comprises a master node device and at least one slave node device, the master node device and the at least one slave node device are connected in sequence, the topology network management method comprises:
the master node device and the slave node device are configured to perform an initialization operation after being powered on, so that the master node device determines a configuration operation based on the dynamic address of each node device in the topology network;
after completing the initialization operation, the master node device and the slave node device are further configured to perform a configuration operation based on the port attribute of each node device in the topology network after completing the enumeration operation, so that the master node device obtains a port attribute of each node device in the topology network;
after completing the enumeration operation, the master node device and the slave node device are further performing a configuration operation based on a port attribute of each node device in the topology network to complete setting a virtual channel configuration table of each node device in the topology network; wherein the virtual channel configuration table comprises a virtual channel descriptor data transmission for each port in the node device, and the virtual channel descriptor comprises corresponding port and/or data location information;
after completing the configuration operation, the master node device and the slave node device perform data transmission based on the virtual channel configuration table.

10. The topology network management method according to claim 9, wherein the step of performing, by the master node device and the slave node device, a configuration operation based on a port attribute of each node device in the topology network comprises:
generating, by the master node device, a corresponding virtual channel descriptor based on the port attribute of each node device in the topology network;
sending, by the master node device, a configuration request frame to a destination node device, wherein the configuration request frame comprises address information of the destination node device and at least one virtual channel descriptor of the destination node device, and the destination node device is any slave node device;
setting, by the destination node device, a virtual channel configuration table stored in the destination node device based on the virtual channel descriptor in the configuration request frame after receiving the configuration request frame.

11. The topology network management method according to claim 10, wherein the configuration request frame further comprises a total quantity of to-be-configured virtual channels of the destination node device; and the step of performing, by the master node device and the slave node device, a configuration operation based on a port attribute of each node device in the topology network further comprises:
feeding back, by the destination node device, a configuration response acknowledgment frame to the master node device after receiving the configuration request frame, wherein the configuration response acknowledgment frame comprises the address information of the destination node device, address information of the master node device, and a configuration status identifier; and
after receiving the configuration response acknowledgment frame, if determining that the configuration status identifier represents that a virtual channel configuration of the destination node device is not complete, generating, by the master node device, a new configuration request frame based on a remaining virtual channel descriptor of the destination node device, and sending the new configuration request frame to the destination node device until a configuration status identifier in a received configuration response acknowledgment frame represents that the virtual channel configuration of the destination node device is complete.

12. The topology network management method according to claim 9, wherein the topology network management method further comprises:
when receiving non-directional data at a destination port, determining, by the slave node device based on a stored virtual channel configuration table stored in the slave node device, whether a destination descriptor exists; and if the destination descriptor exists, processing the received data based on the destination descriptor; or if the destination descriptor does not exist, sending the received data to a default matching port of the destination port;, wherein the destination port is any port of the slave node device, the destination descriptor is a virtual channel descriptor comprising the destination port.

13. The topology network management method according to claim 12, wherein the processing the received data based on the destination descriptor comprises: extracting data corresponding to a destination descriptor in a current data frame, and determining whether data corresponding to another virtual channel descriptor exists in the current data frame; and if the data corresponding to the another virtual channel descriptor exists, sending an extracted data frame by using the default matching port of the destination port.

14. The topology network management method according to claim 13, wherein after the data corresponding to the destination descriptor in the current data frame is extracted, the extracted data is deleted from the current data frame, and a forward shift and padding operation is performed on the data corresponding to the another virtual channel descriptor, to obtain the extracted data frame.
